# EUROPEAN PATENT APPLICATION

(11) **EP 3 082 297 A1**
(43) Date of publication of application: **19.10.2016**
(21) Application number: 15305561.1
(22) Date of filing: 15.04.2015
(51) Int. Cl.: H04L 12/24, H04L 12/26

(54) **METHOD FOR INTERACTIVE GRAPHICAL SUPERVISION OF TELECOMMUNICATION NETWORK NODES, AND AN INTERACTIVE GRAPHICAL NETWORK MANAGEMENT SYSTEM**

(71) Applicant: ALCATEL LUCENT, 92100 Boulogne-Billancourt (FR)
(72) Inventor: Joubert, Eric, 91620 NOZAY (FR); Evanno, Frederic, 91620 NOZAY (FR); Coelho, Gerald, 91620 NOZAY (FR); Habart, Olivier, 91620 NOZAY (FR); Roman, Alina-Augusta, 91620 NOZAY (FR); Lee, Siu Kei, 91620 NOZAY (FR)
(74) Representative: Berthier, Karine

(57) **Abstract**

A method for interactive graphical supervision of network nodes comprising a plurality of hardware and logical modules (PB1, ..., PB4, RFM1, ..., RFM4, CA1, ..., CA9), comprises the steps of:
- receiving real time configuration and states from at least one network node;
- receiving real time alarms from said network node;
- constructing, and updating in real time, a view of said configuration and alarms;
- displaying this view for an operator.

The constructing a view comprises the step of :
- ordering all the hardware and logical modules (PB1,RFM1,CA1, S1) into a hierarchal order comprising n hierarchical levels;
- generating data representing n rings (R1, ..., R4) having a common center and assigning each hierarchical level to a different ring, the hierarchy descending from the inmost ring (R1) to the outmost ring (R4);
- generating data for representing each module (PB1,RFM1,CA1, S1) of each hierarchical level, by a ring sector in the ring corresponding to this level;
- generating data representing hardware or logical connections (AP1-CAP1, ...) between modules (CA1, RFM1) belonging to different levels;
- receiving, from an operator, an order to rotate at least a first ring (R3) with respect to a secong ring (R2), with a given angle (ANG1) ; and
- generating data representing the first ring (R3) rotated with respect to the second ring (R2) with said given angle (ANG) while keeping the hardware or logical connections between the modules represented in the different rings.

## Description

### BACKGROUND OF THE INVENTION

### Field of the invention

The present invention generally relates to the supervision of telecommunication network nodes, in particular the base stations of a wireless telecommunication network.

A wireless telecommunication network is generally divided in cells. The cellular structure allows for an efficient use of the radio spectrum by the re-use of frequencies. Generally a base station is located in a network node located on a high site for covering several "geographical sectors". The word "sector" is used in the geometric sense; some portion of the circumference of a circle measured in degrees of arc: 60°, 90° and 120° designs are typical. The transmission-reception is generally done in several geographical sectors, often with a few degrees 'extra' to ensure overlap, in order to obtain a wider coverage or full-circle coverage. Each geographical sector is covered by means of a sector antenna that is a directional antenna, with a sector-shaped radiation pattern.

The largest use of these base-stations is for cell phone networks. However they are also used for other types of mobile communications, for example in WiFi networks. They are able to provide various traffic capacities and are equipped with different processing boards, radio modules, antenna connections etc...

These different pieces of equipment need to be adapted to the expected end-users traffic in the different locations where they are deployed. As a consequence, these elements are of different types, and need to be installed and configured in accordance with radio coverage needs (Number of cells, antennas, frequency bands, carriers, geographical sectors ...).

### Description of the prior art

These pieces of equipment may be very complex to install and to configure. So a network operator uses an interactive supervision method that can be executed on a personal computer.

In the context of wireless networks, the supervision of the network elements is classically made through Element Management Systems (EMS). The known EMS usually offer some graphical views and associated facilities. These views present the different networks elements and the links between these elements but not always their internal details.

For instance, the document US 7916690 describes a system implementing an interactive supervision method comprising the steps of:
- gathering wireless network status information from a plurality of wireless access points;
- maintaining, in a database, a network model data structure, said network model data structure including the wireless network status information, wherein the network model data structure comprises a map of a physical region and location information identifying locations of the plurality of wireless access points within the physical region;
- constructing a graphical user interface showing status information for one or more of the plurality of wireless access points, wherein the graphical user interface comprises at least a portion of the map of the physical region and a graphical boundary overlaid on the map defining a sub-region of the physical region;
- identifying, based on the location information of the hierarchical network data model, one or more of the plurality of wireless access points within the sub-region defined by the graphical boundary;
- accessing the wireless network status information in the database to determine a status associated with the identified wireless access points; and
- modulating an attribute of the graphical boundary to indicate the status of one or more of the identified wireless access points located within the sub-region defined by the graphical boundary.

This known method provides some graphical views of the network, which indicate the physical implantation in the real locations on the field. Nevertheless these views do not allow observing the internal organization and internal status of the equipment.

The document US 8806372 B2 describes an interactive supervision method comprising the steps of:
- displaying, by an application program, a window having a first toolbar with first web-browsing controls;
- displaying, by the application program, a first panel within the window, the first panel including a topology of a network including a plurality of network entities, the topology displayed within the first panel as a collapsible folder structure;
- displaying, by the application program, a second panel within the window, the second panel including a selected sub-plurality of the network entities displayed within the first panel, the selected sub-plurality displayed within the second panel such that each network entity of the selected sub-plurality is displayed as an object interconnected to other objects representing other network entities of the selected sub-plurality by lines;
- displaying, by an embedded web browsing program separate from the application program, a third panel within the window, wherein the third panel includes a second toolbar with second web-browsing controls and a text box to receive text to independently navigate to a network entity corresponding to the received text from the third panel;
- detecting, by the application program, a selection of a given object of the objects within the second panel;
- communicating a reference to the network entity represented by the given object from the application program to the embedded web browsing program;
- retrieving, by the embedded web browsing program, browser-compatible data from the network entity represented by the given object; and
- rendering the browser-compatible data, by the embedded web browsing program, within the third panel.

This known method provides a graphical user interface displaying network properties, and providing some additional possibilities based on the topology view: Thanks to a selection in a network tree or in the topology view, the operator can see some detailed information about a concerned node (Components, attributes, states, alarms, ...). Nevertheless, the operator cannot supply any graphical view of the internal structure of the equipment. It can only display a hardware tree providing a hierarchical view of components and a logical component tree of the equipment. This reveals the great complexity of the equipment but does not provide an easily legible graphic view of the internal organization and states: A schematic hardware view of the boards is displayed but this view is very limited. It does not help to fully see all the connections between the different elements of the equipment and also does not provide a view of the logical elements that are mapped or associated to the hardware elements. Moreover this view is static and not well adapted to observe the great number of connections that may be installed and configured in such equipment. Thus the information available is not complete, and the ergonomic facilities are not well adapted to address all the complexity that would be useful to present to the operator.

The document US 2007/0208840 describes an interactive supervision method comprising the steps of:
- displaying, in a first level view, a plurality of network element groupings in a network context, showing relationships between the network element groupings; and
- displaying, in a second level view, a selected network element grouping from the first level view, the second level view showing lower level properties in the network context of at least one network element of the selected network element grouping.

These known methods provide a graphical representation of different network elements, and of the relationships between them. Different layers can be seen, and there are some zooming facilities. This allows going into the hierarchy, down to an internal hardware view of the equipment, but the operator must make numerous operations, because of the very high number of modules and connections involved. Thus it is difficult for an operator to conceive all the relations between these modules. The operator must successively open many views in order to see many complementary pieces of information about the equipment, for instance to follow hardware and logical connections between the numerous modules constituting a base station. In particular, it is difficult to trace a default in the equipment, because the graphical user interface provided by these known methods cannot represent a mix of logical and hardware modules, nor the internal relations between them, in a single view.

The aim of the invention is to provide a better interactive supervision method enabling an operator to easily visualize, understand, and supervise the internal modules and internal connections of network equipment, such as a base-station.

In particular, it should be able to clearly represent a mix of logical and hardware modules, and the internal relations between them, in a single view.

### SUMMARY OF THE INVENTION

A first object of the invention is a method for interactive graphical supervision of network nodes comprising a plurality of hardware and logical modules, this method comprising the steps of:
- receiving real time configuration and states from at least one network node;
- receiving real time alarms from said network node;
- constructing, and updating in real time, a view of said configuration and alarms;
- displaying this view for an operator;
characterized in that constructing a view comprises the step of :
- ordering all the hardware and logical modules into a hierarchal order comprising a plurality of hierarchical levels;
- generating data representing n rings having a common center and assigning each hierarchical level to a different ring, the hierarchy descending from the inmost ring to the outmost ring;
- generating data for representing each module of each hierarchical level, by a ring sector in the ring corresponding to this level;
- generating data representing hardware or logical connections between modules belonging to different levels;
- receiving, from an operator, an order to rotate at least a first ring with respect to a secong ring, with a given angle; and
- generating data representing the first ring rotated with respect to the second ring with said given angle while keeping the hardware or logical connections between the modules represented in the different rings.

Thanks to the circular representation on rings, and to the possibility to rotate at least one ring with respect to another ring, while keeping the hardware and logical connections between the modules represented in the different rings, it is possible to clearly view many details, in particular all the hardware and logical connections. When some connections are considered as interesting it is possible to get a better view of the interesting connections by simply rotating a ring, as needed, without having to open any other view. A view can easily represent a mix of logical and hardware modules, and the internal relations between them, in a single view. So an operator can more quickly understand the physical connections between the different hardware modules, as well as the organization of the logical elements on these hardware modules. In addition, the operator will be able to easily observe the alarms that may be raised on the different hardware elements, or on the logical elements, and the states of the different modules. The hardware impacts of failures or issues will be easily understood by the operator. This latter will then be able to remedy a default more quickly.

According to particular embodiment, generating data for representing each module of each hierarchical level, by a ring sector in the ring corresponding to this level further comprises the steps of:
- receiving, from an operator, an order to: expand the ring sector representing a given module on a ring, reduce the sectors representing other modules on this ring, and space out the representations of connections to and from said given module;
- and then generating data representing each module of this ring so that: the ring sector representing this given module is expanded on this ring, the ring sectors representing other modules are reduced on this ring, and the representations of connections to and from said given module are more spaced out.

A second object of the invention is an interactive graphical network management system comprising means for executing some steps of the method according to the invention.

A third object of the invention is an interactive graphical network management client for executing some steps of the method according to the invention.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 is a block diagram showing exemplary network nodes and an embodiment of the interactive graphical network management system according to the invention.
- Figure 2 is a more detailed block diagram of this embodiment of the interactive graphical network management system according to the invention.
- Figure 3 illustrates an embodiment of the method according to the invention by showing a graphical representation of the logical and physical modules of an exemplary base station, without their connections.
- Figure 4 illustrates the same embodiment of the method according to the invention by showing a graphical representation of the logical and physical modules, with their connections, in a first display position where it is difficult to view some connections.
- Figure 5 illustrates the same embodiment of the method according to the invention by showing a graphical representation of the logical elements and physical elements, with their connections, after rotating the rings so that it is easier to view some connections.

### DETAILED DESCRIPTION OF THE PREFERRED EMBODIMENTS

The main principle of the proposed solution is to present, to the operator, a real time view of the key hardware and logical elements that compose the network equipment. This solution is based on the complete, detailed and real time knowledge of the current configuration and states of the equipment. So the main objective of the solution is to present in a synthetic, detailed and comprehensive way the internal organization and associated internal states of the equipment. The instantaneous ability of the equipment to deliver its service is the most important thing to know for the operator. Thus it looks essential to provide him a visibility on both the hardware and logical elements that provide the functional service. As a consequence, the solution will display to the operator not only indications on the key hardware modules of the equipment but also how logical functional elements are mapped on these hardware module. Thus, through this view, the operator will have access to a complete and detailed view indicating the health of the equipment.

In the case of a base station, there are several types of hardware elements that are essential to provide the service to the end-users (processing and modem boards, radio modules, connectors, internal physical links between the elements, antenna ports, ...). This service will be delivered through logical cells and radio geographical sectors. For this service delivery, the different hardware elements can be considered hierarchically (processing boards, connections to radio modules, radio modules, antenna ports, ...). As the radio antennas provide the signalization and traffic to the cells and geographical sectors, these logical elements can be considered as the highest levels of the hierarchy. To display all these elements together, rather than trying to present them according to their physical location in the equipment or in horizontal layers, the solution chosen is to present them in a circular way.

In this embodiment, the lower levels of the hierarchy are in the center and the upper layers are in the periphery. However the method is not limited to this arrangement: the higher levels of the hierarchy could be in the center and the upper layers in the periphery. The more legible arrangement is the arrangement where more many connections to be represented are located in the outer part of the view.

The hardware and logical elements are presented together in the view, knowing that some complementary ergonomic facilities can allow focusing on some elements of the product if desired.

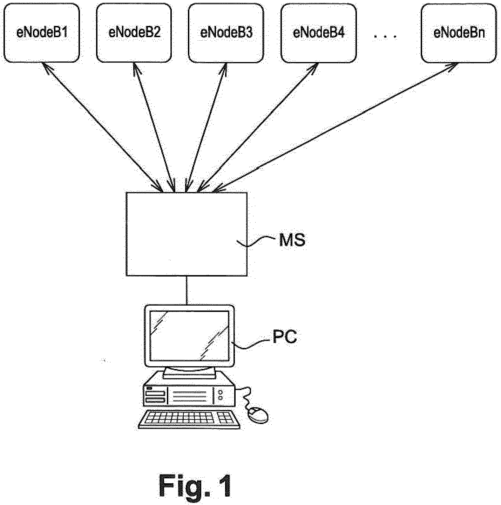

On **Figure 1****,** an embodiment MS of the interactive graphical network management system according to the invention is connected to n base stations eNode1, ..., eNode Bn of a wireless telecommunication network, and to a personal computer PC for displaying a graphical representation of the logical and physical modules of one these base stations, for instance eNobeB1, with the connections between these modules. Views of different base stations can be displayed successively on the same personal computer PC. Different views of a same base station can be displayed at the same time by other management systems and personal computers used other operators concerned by the same set of base stations.

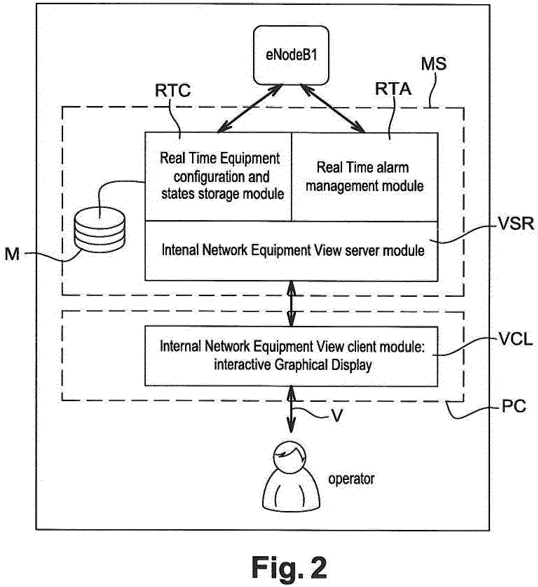

**Figure 2** is a more detailed block diagram of this embodiment MS of the interactive graphical network management system according to the invention, and of an embodiment VCL of the client according to the invention, executed by the personal computer PC.

This embodiment MS of the interactive graphical network management system comprises:
- A real time configuration and state storage module RTC associated to a memory M. It is a software module that gathers all the characteristics and states of the nodes, and is updated in real time, thanks to direct connections with the nodes.
- A real time alarm management module RTA. It is a software module that gathers all the alarms and notifications generated by the nodes, thanks to direct connections with the nodes
- A server VSR comprising a processor configured for:
   -- receiving data from the real time configuration and state storage module RTC and from the real time alarm management module RTA;
   -- receiving orders from a client;
   -- and for generating data representing an interactive graphical view of a given node.
- A personal computer PC comprising a processor configured for executing an internal network equipment view client VCL. This a software module for receiving the data generated by the server VSR in order to display a graphical view of the given node, and for giving orders to the server VSR, via a mouse and a classical keyboard. In particular, the client VCL can order to the server VSR to rotate a part of the view, as it will be described below.

The server VSR constructs and updates, in real time, a view V of said configuration and alarms as a function of:
- the real time configuration and states from the given node, for instance eNodeB1;
- the real time alarms and notifications from the node eNodeB1;
- and the orders received from the client VCL so that the operator interacts with the server VSR for constructing a more legible view.

Then the server VSR sends this view V to the client VCL, in order to display this view V on the screen of the personal computer PC, to be seen by an operator.

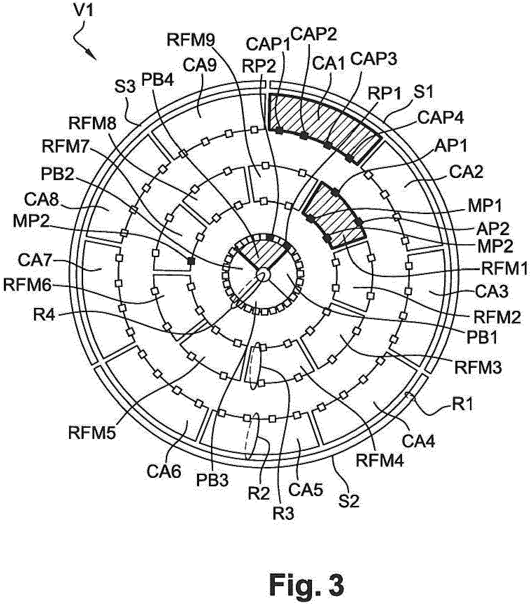

**Figures 3****,** **4****,** **5** illustrate an embodiment of the method according to the invention by showing by views V1, V2, V3 of the logical and physical modules of a same exemplary base station that comprises:
- Four processing boards PB1, PB2, PB3, PB4, each one comprising six radio ports RPi. For instance, the processing board PB1 comprises radio ports RP1, RP2, etc.
- Six radio frequency modules RFM1, ..., RFM9. For instance, the module RFM1 comprises:
   -- two radio frequency modules ports MP1, MP2; each radio frequency module port may be connected to a radio port of any one of the processing boards PB1, PB2, PB3, PB4;
   -- and two antenna ports AP1 and AP2.
- Nine cell antenna CA1, ..., CA9, each one comprising four cell antenna ports. For instance, the cell antenna CA1 comprises four cell antenna ports CAP1, CAP2, CAP3, CAP4. Each cell antenna port can be connected to an antenna port of any one of the radio frequency modules RFM1, ..., RFM9.

This exemplary base station radiates in three geographical sectors S1, S2, S3 of 120 degrees:
The cell antennas CA1, CA2, CA3 radiate in the geographical sector S1
The cell antennas CA4, CA5, CA6 radiate in the geographical sector S2.
The cell antennas CA7, CA8, CA9 radiate in the geographical sector S3.

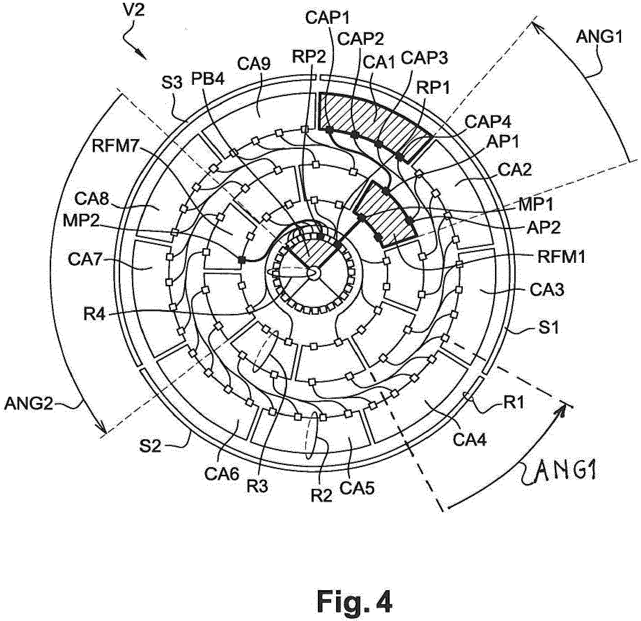

In the server VSR, the module for constructing a view comprises software modules respectively for:
- Ordering all the hardware and logical modules into a hierarchal order comprising n hierarchical levels; for this examplary base station, there are four hierarchical levels:
   -- three geographical sectors S1, S2, S3 at the first (highest) level;
   -- nine cell antennas CA1, ..., CA9 at the second level;
   -- nine radio frequency modules RFM1, ..., RFM9 at the third level;
   -- four processing boards PB1, PB2, PB3, PB4 at a fourth (lowest) level.
- Generating data representing n rings having a common center and respectively assigning the n hierarchical levels to n concentrical rings, the hierarchy descending from the outmost ring R1 to the inmost ring R4, in this embodiment.
- Generating data representing the modules of each hierarchical level, respectively by ring sectors in the ring corresponding to this level. Figure 3 illustrates this embodiment of the method according to the invention by showing a view V1 of the logical and physical modules of this exemplary base station, without their connections. For instance:
   -- The geographical sector S1 is represented by a ring sector of 120 degrees in the ring R1 corresponding to the first hierarchical level.
   -- The cell antenna CAP1 is represented by a ring sector of 40 degrees in the ring R2 corresponding to the second hierarchical level.
   -- The radio frequency module RFM1 is represented by a ring sector of 40 degrees in the ring R3 corresponding to the third hierarchical level.
   -- The processing board PB4 is represented by a ring sector of 90 degrees in the ring R4 corresponding to the fourth hierarchical level.
- Generating data representing hardware connections and/or logical connections between modules belonging to different levels. Figure 4 illustrates the same embodiment of the method according to the invention by showing a view V2 of the logical and physical modules, with their connections, in a first display position.
- Receiving, from an operator, an order to rotate at least a first ring with respect to a secong ring, with an angle chosen by the operator so that some part of the connections will become more legible.
- Generating data representing a ring rotated, around the common center, with respect to a neighboring ring, with said angle, while keeping the hardware or logical connections between the modules represented in the different rings.

**Figure 4** represents the view V2 originally generated by the client. The operator has a first look at this view V2 and then wishes, for instance, to have a better view of the connection between the cell antenna port CAP1, of the cell antenna CA1, and the antenna port AP1, of the radio frequency module RFM1. In order to get this better view, the operator rotates, around the common center, the rings R1 and R2 together with respect to the rings R3 and R4, with an angle ANG1. The other rings R3 and R4 are not rotated for the moment.

Then, the operator further wishes to have a better view of the connection between the radio port RP2, of the processing module PB4, and the port MP2 of the radio frequency module RFM7. In order to get this better view, the operator rotates, around the common center, the rings R1, R2, R3 together, with respect to the ring R4, with an angle ANG2. The position of each ring is modified continuously by dragging a ring with a mouse, and the resulting view is displayed in real time. So the operator adjusts the positions of the rings R1, R2, R3, R4 interactively, by looking at the resulting view, until the operator has a clear view of the two interesting connections.

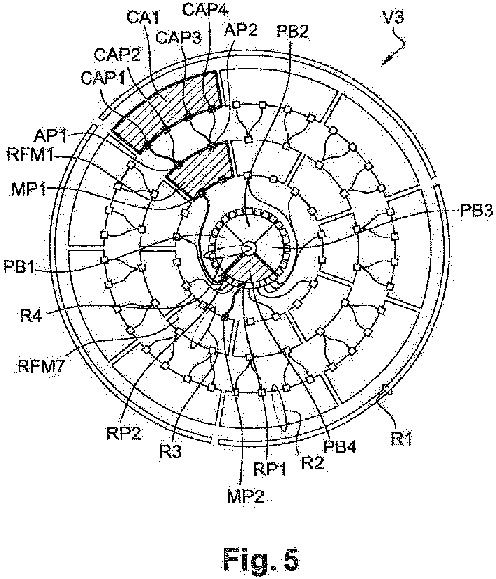

**Figure 5** illustrates the same embodiment of the method according to the invention by showing a view V3 of the logical elements and physical elements, with their connections, after these two rotations. One can better see the connections between the cell antenna CA1 and the radio frequency module RFM1, and the connection between the processing module PB4 and the radio frequency module RFM7, because their representations are now shorter and straighter.

The possibility for the operator to perform, by a simple interaction like a drag, some rotations of the elements is really useful. Thanks to this rotation feature, operator is able to position the connected elements face to face to have a better view. It brings a very helpful way to visualize the internal connectivity. Thus the method according to the invention provides a clear combined view of logical and hardware information, and despite of the complexity of the equipments, allows providing both a synthetic and comprehensive view of the internal relationships in the equipment.

In a particular embodiment, generating data for representing each module of each hierarchical level, by a ring sector in the ring corresponding to this level further comprises the steps of:
- receiving, from an operator, an order to: expand the ring sector representing a given module on a ring, reduce the ring sectors representing other modules on this ring, and space out the representations of connections to and from said given module;
- and then generating data representing each module of this ring so that: the ring sector representing this given module is expanded on this ring, the ring sectors representing other modules are reduced on this ring, and the representations of connections to and from said given module are more spaced out.

On Figure 5, the processing board PB4 is represented by a ring sector of 90 degrees on the ring R4. It comprises nine ports that are respectively used by nine connections to nine radio frequency modules, such as the RFM1. Each other processing boards PB1, PB2, PB3 is also represented by a ring sector of 90 degrees on the ring R4. But the processing boards PB1, PB2, PB3 have no connection to be represented. The nine connections to nine radio frequency modules can be more clearly represented by this particular embodiment.

The operator can order to: expand to 180 degrees (for instance) the ring sector representing the processing board PB4 on the ring R4; reduce to 60 degrees the three ring sectors respectively representing the processing boards PB1, PB2, PB3 on this ring R4; and space out the representations of the nine connections from the processing board PB4 to the radio frequency modules.

The server VSR further comprises a software module for receiving this order and then generating data representing each processing board PB1, PB2, PB3, PB4 of this ring R4 so that: the ring sector representing this processing board PB4 is expanded to 180 degrees on this ring R4, the ring sectors representing the other processing boards PB1, PB2, PB3 are reduced to 60 degrees on this ring R4, and the representations of the nine connections from the processing board PB4 to the radio frequency modules RFM1, etc, are spaced out on the 180 degree ring sector. They are more spaced, so they are more clearly legible.

In another embodiment, the server VSR further comprises a software module for:
- receiving, from an operator, an order to highlight a module or a connection; and
- generating data representing said module or connection highlighted.

In another embodiment, the server VSR further comprises a software module for:
- receiving, from an operator, an order to zoom on a selected module or connection; and
- generating data representing said view with a zoom effect on said selected module or connection.

Associated to these facilities, when the operator selects an element, all the details of this element may be displayed in another part of the screen (in a list of attributes and values associated to the selected object). However some key characteristics of the elements are already available on the graphical view. Thus, at a glance, through colors or other graphical facilities (icons, blinks, highlights, dedicated contours, etc...) that can be customized, the operator can directly see the health of the elements:
- Indication of the active alarms present on the elements.
- Indication of the states of the elements (administrative, operational states or availability status).
- Etc ...

All the elements of the view are dynamically updated in real time thanks to the proposed architecture.

Thanks to all the facilities offered by the proposed method, the operator has access to a real time view of the internal health of the equipment. The operator quickly understands the different relations between all the elements (hardware and logical) and interacts with the view to focus on some part(s) of the view. This interaction allows him to study some details of the internal organization, for instance to better understand the consequences of the arrival of some particular events or alarms. The different interaction facilities are intuitive (thanks to the mouse usage) so that the operator can, on demand, modify the presentation in order to focus, in a timely manner, on a given situation.

With this synthetic, clear and user-friendly view, the operator can easily see the impacts of some faults and take the good troubleshooting decisions.

The different views that have been shown in figures 3-5 voluntarily show an example with reduced complexity, for the sake of clarity. Nevertheless, the proposed method can support additional hierarchical layers of elements, with additional complexity.

Moreover, in the presented views, elements in two dimensions have been shown. Same principles may be applied with objects in three dimensions. The interactive graphical view can then allow the operator to position himself at a given place "in the space" to be able to observe the elements in the most appropriate perspective.

The implantation of the software modules of the server and of the client is within the scope of a man skilled in the art. The client and the server use classical web software pieces, for instance: HTML5 (Hypertext Markup Language), CSS (Cascading Style Sheets), SVG (Scalable Vector Graphics), JavaScript.

## Claims

1. Method for interactive graphical supervision of network nodes comprising a plurality of hardware and logical modules (PB1, ..., PB4, RFM1, ..., RFM4, CA1, ..., CA9), this method comprising the steps of:
- receiving (RTC) real time configuration and states from at least one network node (eNodeB1);
- receiving (RTA) real time alarms from said network node (eNodeB1);
- constructing (VSR), and updating in real time, a view (V) of said configuration and alarms;
- displaying (VCL) this view (V) for an operator;
**characterized in that** constructing a view comprises the step of :
- ordering all the hardware and logical modules (PB1,RFM1,CA1, S1) into a hierarchal order comprising a plurality of hierarchical levels;
- generating data representing n rings (R1, ..., R4) having a common center and assigning each hierarchical level to a different ring, the hierarchy descending from the inmost ring (R1) to the outmost ring (R4);
- generating data for representing each module (PB1,RFM1,CA1, S1) of each hierarchical level, by a ring sector in the ring corresponding to this level;
- generating data representing hardware or logical connections (AP1-CAP1, ...) between modules (CA1, RFM1) belonging to different levels;
- receiving, from an operator, an order to rotate at least a first ring (R3) with respect to a secong ring (R2), with a given angle (ANG1); and
- generating data representing the first ring (R3) rotated with respect to the second ring (R2) with said given angle (ANG) while keeping the hardware or logical connections between the modules represented in the different rings.

2. A method according to claim 1, wherein generating data for representing each module (PB1,RFM1,CA1, S1) of each hierarchical level, by a ring sector in the ring corresponding to this level further comprises the steps of:
- receiving, from an operator, an order to: expand the ring sector representing a given module on a ring, reduce the ring sectors representing other modules on this ring, and space out the representations of connections to and from said given module;
- and then generating data representing each module (PB1,RFM1,CA1, S1) of this ring so that: the ring sector representing this given module is expanded on this ring, the ring sectors representing other modules are reduced on this ring, and the representations of connections to and from said given module are more spaced out.

3. A method according to claim 1, wherein constructing a view further comprises the step of:
- receiving, from an operator, an order to highlight a module or a connection; and
- generating data representing said module or connection highlighted.

4. A method according to claim 1, wherein constructing a view further comprises comprises the steps of:
- receiving, from an operator, an order to zoom on a selected module or connection; and
- generating data representing said view with a zoom effect on said selected module or connection.

5. An interactive graphical network management system (MS) **characterized in that** it comprises means for implementing the method according to the claim 1.

6. An interactive graphical network management client (VCL) **characterized in that** it comprises means for implementing the method according to one of the claims 2-4.
